# EUROPÄISCHE PATENTSCHRIFT

(11) **EP 2 235 699 B1**
(45) Veröffentlichungstag und Bekanntmachung des Hinweises auf die Patenterteilung: **27.06.2012**
(21) Anmeldenummer: 09703274.2
(22) Anmeldetag: 21.01.2009
(51) Int. Cl.: G07F 17/32

(54) **SPIEL- UND/ODER UNTERHALTUNGSGERÄT**
GAME AND/OR ENTERTAINMENT UNIT
APPAREIL DE JEU ET/OU DE DIVERTISSEMENT

(30) Priorität: 21.01.2008 DE 202008000841 U
(43) Veröffentlichungstag der Anmeldung: 06.10.2010
(60) Teilanmeldung: 11008350.8
(73) Patentinhaber: Novomatic AG, 2352 Gumpoldskirchen (AT)
(72) Erfinder: GAWEL, Marek, A-2514 Traiskirchen (AT)
(74) Vertreter: Thoma, Michael
(86) Internationale Anmeldenummer: PCT/EP2009/000358
(87) Internationale Veröffentlichungsnummer: WO 2009/092573

(56) Entgegenhaltungen:
- EP-A- 0 544 155
- EP-A- 1 533 763
- EP-A- 1 722 560
- WO-A-98/16144
- WO-A-2007/121577
- DE-A1- 3 533 443
- JP-A- 2005 328 898
- JP-A- 2007 202 792
- US-A1- 2006 189 392
- US-A1- 2006 287 103
- US-A1- 2007 173 331
- US-B1- 6 633 276

## Beschreibung

Die vorliegende Erfindung betrifft allgemein ein Spiel- und/oder Unterhaltungsgerät mit zumindest einem Bildschirm, der an einem Gerätepaneel verstellbar angeordnet ist. Insbesondere betrifft die Erfindung dabei einen Multispieltisch mit mehreren Spielerplätzen, an denen jeweils ein Bildschirm an einem Tisch- und/oder Pultpaneel verstellbar angeordnet ist.

Bei sog. Multispieltischen, die beispielsweise zum Pokerspiel, ggf. auch zum Roulettespiel verwendet werden, ist es bekannt, an den jeweiligen Spielerplätzen Bildschirme vorzusehen, die auf dem zu einem Spielerplatz gehörigen Spieltischabschnitt angeordnet sind. Derartige Bildschirme zeigen dem jeweiligen Spieler entsprechende Spielinformationen an. Dies können beispielsweise bei einem Pokertisch die einem Spieler zugeteilten Spielkarten sein. Alternativ kann beispielsweise bei einem Roulettetisch auf dem Bildschirm ein Setzfeld angezeigt werden, auf dem beispielsweise bei Ausbildung des Bildschirms in Form einer Touch-Screen-Vorrichtung der jeweilige Spieler seine Einsätze platzieren kann.

Dabei wurde bereits vorgeschlagen, die auf dem Spieltisch angeordneten Bildschirme verstellbar zu lagern, so dass sich jeder Spieler seine Bildschirmposition individuell einstellen kann, beispielsweise um Bildschirmspiegelungen zu verhindern, aber auch um benachbarte Spieler nicht auf den eigenen Bildschirm sehen zu lassen. Insbesondere können die genannten Bildschirme um liegende Querachsen verkippt werden, um sie sozusagen zu dem am Spieltisch sitzenden Spieler hin aufzurichten. Dies beeinträchtigt indes bisweilen die Übersichtlichkeit des Spieltisches.

Einen Muiltispieltisch mit umliegende Querachsen verkippbaren Bildschirmen zeigt beispielsweise die WO 2007/121577 A1. Weiterhin lehrt es die Schrift EP 1 722 560 A2, den Bildschirm eines Fernsehgeräts motorisch zu verstellen. Weitere verstellbare Display-Vorrichtungen für Spielgeräte zeigen die Schriften DE 35 33 443 A1 und EP 0 544 155 A1.

Hiervon ausgehend liegt der vorliegenden Erfindung die Aufgabe zugrunde, ein verbessertes Spiel- und/oder Unterhaltungsgerät der genannten Art zu schaffen, das Nachteile des Standes der Technik vermeidet und Letzteren in vorteilhafter Weise weiterbildet. Insbesondere soll eine besser an die jeweils am Gerät befindliche Spielergruppe anpassbare Bildschirmpositionierung erreicht werden, die einen hohen Bedienkomfort bietet und an den Spielverlauf anpassbar ist.

Erfindungsgemäß wird diese Aufgabe durch ein Spiel- und/oder Unterhaltungsgerät gemäß Anspruch 1 gelöst. Bevorzugte Ausbildungen der Erfindung sind Gegenstand der abhängigen Ansprüche.

Um eine besonders einfache Bedienung des Spielgeräts mit hohem Handhabungskomfort zu ermöglichen, ist nach der vorliegenden Erfindung eine Voreinstellvorrichtung zur automatischen Voreinstellung des zumindest einen Bildschirms auf eine vorbestimmte Bildschirmposition in Abhängigkeit eines von einer Identifikationseinrichtung am jeweiligen Spielerplatz erfassten, jeweiligen Spielers vorgesehen. Die genannte Voreinstellvorrichtung hält für verschiedene Spieler bzw. verschiedene Spielergruppen verschiedene voreingestellte Bildschirmpositionen bereit. Sobald die Identifikationseinrichtung einen Spieler bzw. eine Spielergruppe identifiziert, für die eine bestimmte Bildschirmposition vorbestimmt ist, fährt die Voreinstellvorrichtung den Bildschirm in diese vorbestimmte Bildschirmposition.

Es wird ferner eine in das Gerätepaneel versenkbare Anordnung der Bildschirme vorgesehen, so dass nicht benötigte Bildschirme oder Bildschirme eines nicht mehr spielberechtigten Spielers weggefahren werden können, wodurch einerseits die Übersichtlichkeit des Spielgeräts insgesamt verbessert wird und andererseits auch eine Anzeige geschaffen wird dafür, ob ein jeweiliger Spielerplatz in Betrieb ist oder nicht. Dabei ist der zumindest eine Bildschirm zwischen einer in das Gerätepaneel versenkten Versenkstellung im Wesentlichen ohne Überstand über das Gerätepaneel und einer aus dem Gerätepaneel herausspringenden Betriebsstellung verstellbar. Die versenkte Stellung kann insbesondere als Ruhestellung dienen, in der der jeweilige Bildschirm sozusagen nicht im Weg ist und eine im Wesentlichen ebene Geräteoberfläche, insbesondere Tischoberfläche geschaffen werden kann. In der genannten Versenkstellung kann der Bildschirm ggf. vollständig unter das Gerätepaneel abgesenkt und die entsprechende Aussparung mit einer Abdeckung verschlossen sein. Vorzugsweise jedoch ist der Bildschirm in der genannten Versenkstellung im Wesentlichen bündig mit der Paneeloberfläche abgesenkt.

Der Bildschirm kann hierbei grundsätzlich in verschiedener Art und Weise verstellbar sein. Insbesondere ist er zumindest um eine liegende Querachse verkippbar, so dass er aus der genannten abgesenkten Versenkstellung sozusagen auf den vor dem Gerät befindlichen Spieler hin aufgekippt werden kann. Alternativ oder zusätzlich kann der Bildschirm auch um eine vorzugweise liegende Längsachse und/oder um eine aufrechte Hochachse verschwenkt werden, was beispielsweise dazu genutzt werden kann, dass der Bildschirm von einem benachbarten Spieler weggekippt wird, um diesen nicht auf den Bildschirm sehen zu lassen. Alternativ oder zusätzlich kann der genannte Bildschirm ferner auch translatorisch verstellbar sein, insbesondere im Wesentlichen senkrecht zur Gerätepaneeloberfläche aus- und einfahrbar sein, wodurch der Bildschirm insgesamt ggf. auch ohne Verkippen aus dem Gerätepaneel herausgefahren bzw. in dieses versenkt werden kann. Um maximale Verstellmöglichkeiten zu bieten, kann der Bildschirm mehrachsig verstellbar gelagert sein.

In einfacher Weiterbildung der Erfindung könnte grundsätzlich vorgesehen sein, dass der Bildschirm händisch zu verstellen ist. Um einen hohen Bedienungskomfort zu erreichen und eine leichte Verstellbarkeit ggf. auch sehr großer Bildschirme zu ermöglichen, ist jedoch in Weiterbildung der Erfindung dem Bildschirm zumindest ein Stellantrieb, vorzugsweise ein Elektromotor mit einem zugehörigen Stellgetriebe, zugeordnet, mittels dessen der Bildschirm durch Fremdenergie verstellt werden kann. Insbesondere ist der Stellantrieb dabei zumindest den Bewegungsachsen des Bildschirms zugeordnet, die eine vertikale Bewegungskomponente gestatten, so dass zumindest die durch die Gewichtskraft des Bildschirms erschwerten Stellbewegungen motorisch ausführbar sind. Vorteilhafterweise kann jedoch der Stellantrieb entsprechend mehrachsig arbeitend ausgebildet sein, um die verschiedenen Bewegungsachsen des Bildschirms motorisch betätigen zu können.

Vorteilhafterweise umfasst die vorgenannte Voreinstellvorrichtung hierbei eine programmierbare Memory-Funktion, mittels derer ein Spieler seine Lieblingsbildschirmposition einstellen und abspeichern kann, um sie beim nächsten Aufsuchen des Spiel- bzw. Unterhaltungsgerätes sozusagen aufrufen zu können. Die Voreinstellvorrichtung kann hierzu einen Positionsspeicher aufweisen, in dem eine jeweils individuell eingestellte Bildschirmposition in Verknüpfung mit einem Spieleridentifikationscode abgespeichert wird. Wird der Voreinstellvorrichtung der entsprechende Spieleridentifikationscode zugeführt, wird die abgespeicherte Bildschirmposition aufgerufen und eingestellt.

Um den Bedienkomfort weiter zu erhöhen kann die Voreinstellvorrichtung eine automatische Abspeicherung der jeweils zuletzt eingestellten Bildschirmposition vorsehen, die der jeweilige Spieler gewissermaßen zuletzt beim Verlassen des Spielgeräts eingestellt hatte. Eine entsprechende Speichersteuerung speichert die zuletzt eingestellte Bildschirmposition in den zuvor genannten Positionsspeicher, wenn sich ein jeweiliger Spieler beispielsweise durch Beenden des Spiels abmeldet.

Die Spieleridentifikation kann grundsätzlich in verschiedener Art und Weise erfolgen. Beispielsweise können vom Spieler betätigbare Eingabemittel wie beispielsweise eine Tastatur vorgesehen sein, über die ein individueller Code eingegeben werden kann. In bevorzugter Weiterbildung der Erfindung kann die Identifikationsvorrichtung ein Chipkarten-Lesegerät aufweisen. Steckt beispielsweise ein Spieler seine Kreditkarte oder einen Spielerausweis in das Gerät, wird die hierzu abgespeicherte Bildschirmposition aufgerufen und angefahren.

Alternativ oder zusätzlich kann die Identifikationseinrichtung ein Biometriedatenlesegerät beispielsweise in Form eines Fingerabdrucklesers und/oder eines Augenscanners bzw. Irislesers aufweisen.

Die Verstellbarkeit des zumindest einen Bildschirms kann in vorteilhafter Weiterbildung der Erfindung auch dazu genutzt werden, die Bildschirmposition automatisch in Abhängigkeit des Spielablaufes zu verstellen, wodurch einerseits eine Erhöhung des Spielanreizes erreicht wird, andererseits auch eine Spielsteuerung und Anzeige des Spielstandes erreicht werden kann. Hierzu kann in Weiterbildung der Erfindung eine Steuervorrichtung zur automatischen Verstellung der Bildschirmposition in Abhängigkeit des Spielablaufs vorgesehen sein. Spezielle Spielabschnitte oder -vorgänge und besondere Spielsituationen können durch Veränderung der Bildschirmposition oder Bewegung des Bildschirms hervorgehoben werden, so dass die Aufmerksamkeit der Spieler auf den jeweiligen Spielerplatz gelenkt wird.

Die Spielablaufsteuerung der Bildschirmposition kann hierbei grundsätzlich verschieden ausgebildet sein. Vorteilhafterweise können Gewinnanzeigemittel zur Veränderung der Bildschirmposition und/oder zur zyklischen Hin- und Herbewegung des Bildschirms bei Erzielen eines Spielgewinns oder bei Erreichen einer entscheidenden Spielsituation beispielsweise kurz vor Ausgabe der entscheidenden Spielkarte vorgesehen sein. Erhält beispielsweise ein Pokerspieler seine letzte Spielkarte, kann die Steuervorrichtung durch entsprechende Ansteuerung des Stellantriebs oder der mehreren Stellantriebe eines Bildschirms diesen hin- und herrüttelnd bewegen und/oder auf- und abfahren und/oder hin- und herkippen. Auch bei Auftreten anderer Spielsituationen kann die Bildschirmposition verändert werden, beispielsweise kann bei Erzielen eines Gewinns der Bildschirm angehoben werden, um sozusagen eine herausgehobene Podeststellung des Siegers zu symbolisieren.

Insbesondere können auch in Abhängigkeit eines noch vorhandenen Spielkredits und/oder verfübaren Spieleinsatzes arbeitende Deaktivierungsmittel vorgesehen sein, die beispielsweise bei vollständigem Verspielen des Spielkredits den Bildschirm in seine versenkte Ruhestellung fahren und/oder bei Auffüllen des Spielkredits den Bildschirm in seine aus dem Gerätepaneel herausspringende Betriebsstellung bringen.

Zusätzlich zu der genannten automatischen Steuerung der Bildschirmposition kann das Spiel- und/oder Unterhaltungsgerät auch eine manuelle Steuerung des Bildschirmstellantriebs besitzen. Die hierfür vorgesehenen Eingabemittel können dabei grundsätzlich verschiedene Ausprägungen haben. Um die Bedienbarkeit unabhängig von der Spielerposition zu fördern, kann in Weiterbildung der Erfindung vorgesehen sein, dass die Eingabemittel ein Fußpedal und/oder ein Kniepedal zur Verstellung der Bildschirmposition aufweisen. Alternativ oder zusätzlich kann auch eine Handtaste und/oder ein Handhebel vorzugsweise in Form eines Joysticks zur Verstellung der Bildschirmposition vorgesehen sein. Dabei können die Eingabemittel körperlich mit dem Spielgerät verbunden sein, insbesondere an dem Gerätepaneel angeordnet sein, an dem der Bildschirm gelagert ist. Alternativ oder zusätzlich können auch berührungslos mit dem Spiel- und/oder Unterhaltungsgerät kommunizierende Eingabemittel nach Art einer Remote Control vorgesehen sein, beispielsweise in Form eines separaten Fußpedals. Zur Kommunikation können dabei verschiedene Übertragungsmittel Verwendung finden, beispielsweise eine Infrarotschnittstelle und/oder eine Bluetoothschnittstelle.

Besonders vorteilhaft ist die zuvor beschriebene Bildschirmverstellbarkeit bei einem Spiel- und/oder Unterhaltungsgerät, das einen Spieltisch mit mehreren Spielerplätzen besitzt, die jeweils einen an einem Tischpaneel verstellbar gelagerten Bildschirm aufweisen. Derartige Spieltische können insbesondere als Pokertische, aber auch als Roulettetische Verwendung finden. In vorteilhafter Weiterbildung der Erfindung kann der Spieltisch einen modularen Aufbau besitzen und aus mehreren Tischpaneelbausteinen zusammengesetzt sein, wobei die genannten Tischpaneelbausteine vorteilhafterweise jeweils ein Paneelteil besitzen, an dem jeweils ein Bildschirm in der zuvor genannten Weise beweglich gelagert ist und das seitliche Anschlussstücke zum Anschließen von Tischverbindungs- und/oder Endstücken besitzt. Hierdurch kann ein Spieltisch in einfacher Weise individuell konfiguriert und mit unterschiedlich vielen Spielerplätzen aufgebaut werden.

Die Erfindung wird nachfolgend anhand eines bevorzugten Ausführungsbeispiels und zugehöriger Zeichnungen näher erläutert. In den Zeichnungen zeigen:
- Fig. 1:: Eine schematische, perspektivische Gesamtansicht eines Spiel- und/oder Unterhaltungsgeräts in Form eines Multispieltischs mit mehreren Spielerplätzen, die jeweils einen in ein Tischpaneel versenkbaren Bildschirm besitzen,
- Fig. 2:: eine perspektivische Ansicht eines einzelnen Tischpaneelbausteins mit einem aus dem Paneelteil herausgekippten Bildschirm,
- Fig. 3:: eine perspektivische Gesamtansicht des Multispieltischs aus Fig. 1, wobei die Bildschirme in ihrer in das Tischpaneel versenkten Versenkstellung gezeigt sind, und

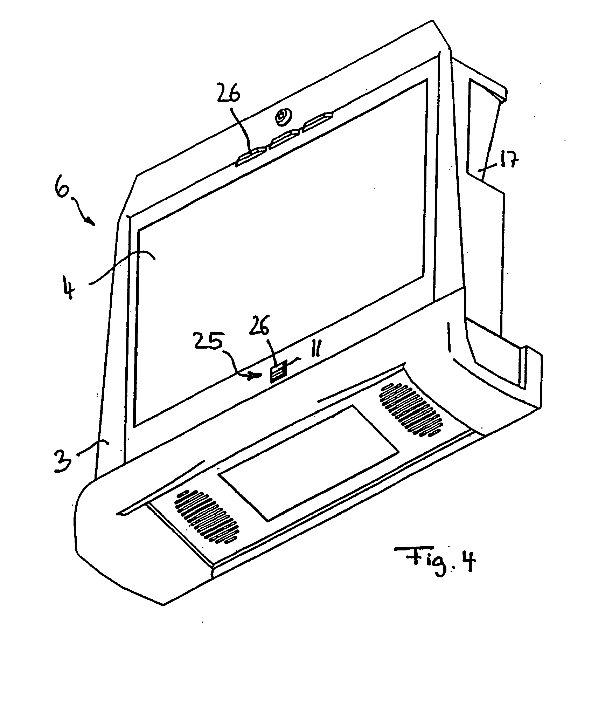

- Fig. 4:: eine perspektivische Ansicht eines einzelnen Tischpaneelbausteins ähnlich Fig. 2, wobei der Bildschirm in seiner in das Paneelteil versenkten Stellung gezeigt ist.

Die in den Figuren gezeichnete Ausführung eines Spiel- und/oder Unterhaltungsgeräts 1 ist als Multispieltisch ausgebildet, der einen Spieltisch 2 aufweist, wobei eine Mehrzahl von Spielerplätzen 18 kranzförmig um ein zentrales Spielfeld 5 herum angeordnet sind. Das kranzförmig das zentrale Spielfeld 5 umgebende Tischpaneel 3 besitzt an jedem Spielerplatz 18 einen Bildschirm 4, der an dem jeweiligen Paneelteil verstellbar gelagert ist, wie noch erläutert wird. Das Tischpaneel 3 sitzt auf strebenförmig angeordneten Spieltischkonsolen 19, in die ein für den jeweiligen Spielerplatz 18 zugehöriges Spielsteuergerät 20 mit entsprechenden Steuermitteln und eine Ausgabevorrichtung integriert sein kann. Beispielsweise kann an den Spieltischkonsolen 19 jeweils eine Geldeingabe- und/oder Ausgabeeinrichtung zur Kreditierung eines Spielers oder ein entsprechendes Kartenlesegerät vorhanden sein, wie dies an sich an derartigen Spieltischen bekannt ist. Die Spieltischkonsolen 19 bilden sozusagen die Füße des Spieltisch 2.

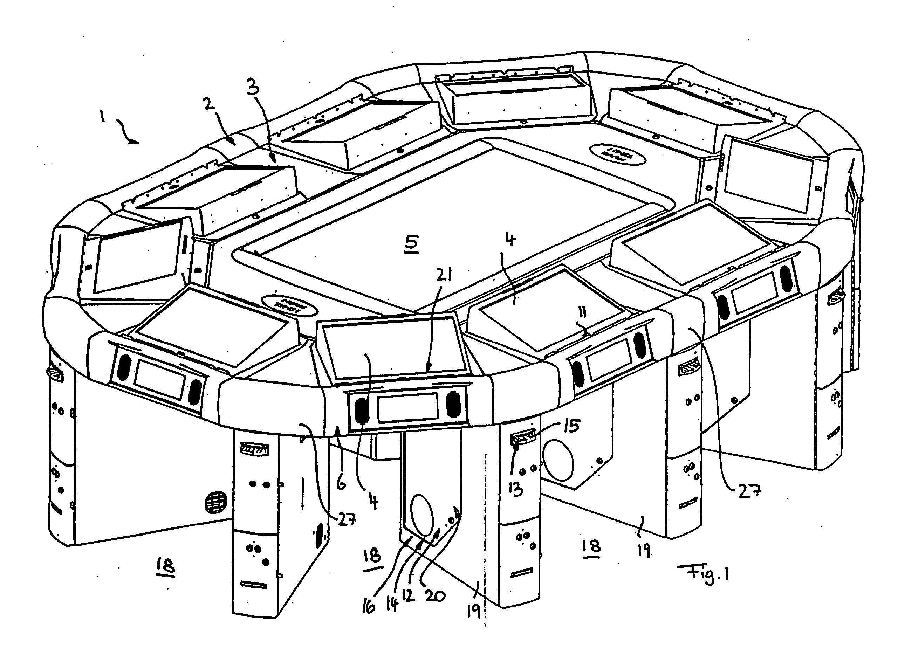

Vor jedem Bildschirm 4 besitzt ein jeder Spielerplatz 18 ein Bedienpaneel 21, das in das Tischpaneel 3 integriert sein kann, vgl. Fig. 1.

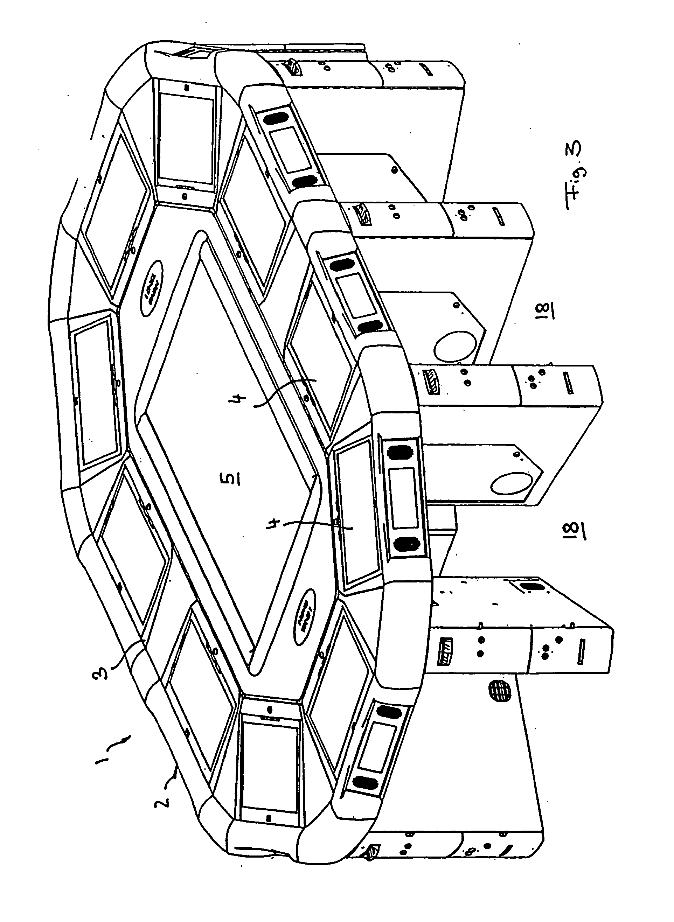

Die Bildschirme 4 sind an dem Tischpaneel 3 verstellbar gelagert. Wie ein Vergleich der Figuren 1 und 3 zeigt, können die Bildschirme 4 insbesondere um eine liegende Querachse verschwenkt werden, so dass die Bildschirme 4 sozusagen auf den jeweiligen am Spieltisch 2 sitzenden oder stehenden Spieler hin aufgekippt werden können. Während Fig. 1 die aufgekippte Stellung zeigt, ist in Fig. 3 die abgesenkte Ruhestellung der Bildschirme 4 gezeigt. Insbesondere können die Bildschirme 4 dabei in eine in das Tischpaneel 3 versenkte Versenkstellung gebracht werden, in der die Bildschirme 4 im Wesentlichen bündig mit der Oberfläche des Tischpaneels 3 in dieses versenkt sind.

Zusätzlich zu der Verstellbarkeit um die liegende Querachse 22 kann ggf. vorgesehen sein, dass die Bildschirme 4 um eine liegende Längsachse 23 und/oder um eine Hochachse 24 verkippt bzw. verschwenkt werden können. Alternativ oder zusätzlich kann auch ein translatorisches Verfahren der Bildschirme 4 entlang der Hochachse 24 vorgesehen sein.

Zur Verstellung der Bildschirme 4 sind diesen entsprechende Stellantriebe zugeordnet, die vorteilhafterweise unter den Bildschirmen 4 liegend in das Tischpaneel 3 integriert sind. Vorteilhafterweise können die genannten Stellantriebe Elektromotoren sein, die ggf. über geeignete Umlenk- bzw. Getriebemittel die gewünschten Bildschirmbewegungen um die jeweiligen Bewegungsachsen bewerkstelligen können.

Zur Betätigung der Stellantriebe sind am Tischpaneel 3 und/oder am jeweiligen Bilschirm 4 geeignete Eingabemittel 25 beispielsweise in Form einer Handtaste bzw. eines Handhebels 26 vorgesehen, durch dessen Betätigung der jeweilige Stellantrieb gesteuert werden kann.

Zusätzlich sind die Stellantriebe zur Bildschirmverstellung mit dem zuvor genannten Steuergerät 20 verbunden, welches vorteilhafterweise eine Steuervorrichtung zur automatischen Steuerung der Bildschirmverstellung in Abhängigkeit des Spielablaufs und/oder auftretender Spielsituationen aufweist. Die genannte Steuervorrichtung kann dabei beispielsweise Gewinnsteuermittel umfassen, die den Bildschirm 4 eines jeweiligen Spielgewinners auf und ab kippt, um dies anzuzeigen oder den Bildschirm nach oben fährt, um eine ansonsten verdeckte Aufschrift "Gewinner" sichtbar zu machen. Weiterhin kann die genannte Steuervorrichtung Aktivierungs- und/oder Deaktivierungsmittel umfassen, die in Abhängigkeit eines dem jeweiligen Spielerplatz noch zur Verfügung stehenden Spielkredits arbeiten. Insbesondere können die Deaktivierungsmittel den Bildschirm 4 automatisch in die in Fig. 3 gezeigte, versenkte Stellung fahren, wenn am jeweiligen Spielerplatz der Spielkredit verspielt ist.

Weiterhin umfasst das Steuergerät 20 vorteilhafterweise eine Voreinstellvorrichtung 12, die mit einer Identifikationseinrichtung 13 zusammenarbeitet, die in der gezeichneten Ausführungsform ein an der Spieltischkonsole 19 angeordnetes Chipkartenlesegerät 15 umfasst, jedoch auch beispielsweise ein am Tischpaneel 3 angeordetes Fingerabdrucklesegerät umfassen kann. Die genannte Voreinstellvorrichtung 12 stellt dabei eine für einen jeweiligen Spieler vorbestimmte Bildschirmposition ein, sobald die Identifkationseinrichtung 13 einen am jeweiligen Spielerplatz 18 spielenden Spieler identifiziert hat. Dies kann beispielsweise dadurch erfolgen, dass der jeweilige Spieler seinen Spielerpass oder seine Kreditkarte in das Chipkartenlesegerät 15 steckt. Die genannte Voreinstellvorrichtung 12 umfasst dabei einen Positionsspeicher 14, in dem für den jeweiligen Spieler dessen präferierte Bildschirmposition abgespeichert ist, und zwar zusammen mit einem Identifikationscode, der es bei Eingabe dieses Identifikationscodes erlaubt, die zugeordnete Bildschirmposition auszulesen und anzufahren. Vorteilhafterweise wird dabei dann, wenn ein Spieler seine Karte wieder aus dem Chipkartenlesegerät 15 herauszieht und/oder sich vom Gerät abmeldet, die zuletzt eingestellte Bildschirmposition als präferierte Bildschirmposition gespeichert, die dann beim nächsten Mal, wenn der Spieler sich wieder an dem Tisch anmeldet, automatisch angefahren wird. Vorteilhafterweise wird dabei die Bildschirmposition zentral abgespeichert und/oder von anderen Steuergeräten 20 abfragbar abgespeichert, so dass auch der Bildschirm eines anderen Spielerplatzes entsprechend eingestellt werden kann, wenn der Spieler sich beim nächsten Mal dort an den Spieltisch 2 setzt.

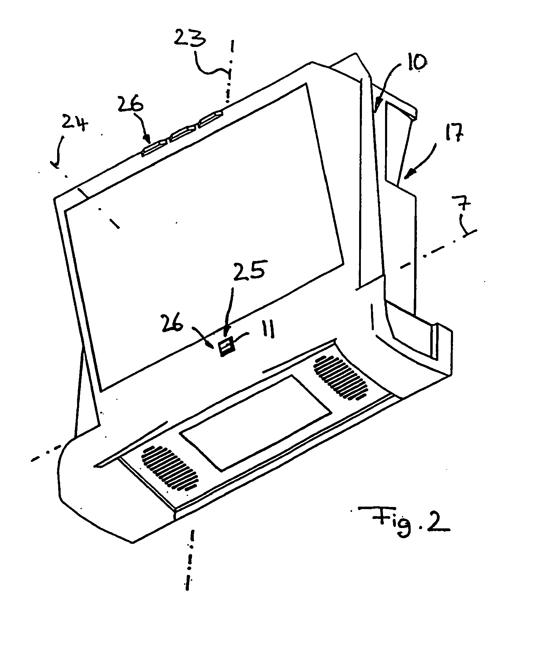

Wie die Figuren 1 und 2 verdeutlichen, ist der Spieltisch 2 modular aufgebaut und aus einer Mehrzahl von Paneelbausteinen 6 zusammensetzbar. Ein solcher Paneelbaustein 6 besitzt, wie Fig. 2 zeigt, jeweils einen Bildschirm 4, der in der beschriebenen Weise in den jeweiligen Paneelbaustein 6 versenkbar und aus diesem herausfahrbar ist. Seitlich umfasst der Paneelbaustein 6 Anschlüsse 17, mittels derer die verschiedenen Paneelbausteine 6 aneinandersetzbar bzw. mit Verbindungsstücken 27 zusammengesetzt werden können, mit denen zusammen der Spieltisch 2 insgesamt aufgebaut wird.

## Patentansprüche

1. Spiel- und/oder Unterhaltungsgerät mit zumindest einem Bildschirm (4), der an einem Gerätepaneel (3) verstellbar angeordnet ist, **dadurch gekennzeichnet, dass** eine Voreinstellvorrichtung (12) zur automatischen Voreinstellung des Bildschirms (4) auf eine vorbestimmte Bildschirmposition in Abhängigkeit eines von einer Identifikationseinrichtung (13) jeweils erfassten Spielers vorgesehen ist.

2. Spiel und/oder Unterhaltungsgerät nach dem vorhergehenden Anspruch, wobei der Bildschirm (4) zwischen einer in das Gerätepaneel (3) versenkten Versenkstellung im Wesentlichen ohne Überstand über das Gerätepaneel (3) und einer aus dem Gerätepaneel (3) herausspringenden Betriebsstellung verstellbar ist.

3. Spiel und/oder Unterhaltungsgerät nach dem vorhergehenden Anspruch, wobei der Bildschirm (4) zumindest um eine liegende Querachse verkippbar ist.

4. Spiel- und/oder Unterhaltungsgerät nach einem der vorhergehenden Ansprüche, wobei der Bildschirm (4) mehrachsig verkippbar ist.

5. Spiel- und/oder Unterhaltungsgerät nach einem der vorhergehenden Ansprüche, wobei der Bildschirm (4) translatorisch im Wesentlichen senkrecht zur Gerätepaneeloberfläche aus- und einfahrbar ist.

6. Spiel- und/oder Unterhaltungsgerät nach einem der vorhergehenden Ansprüche, wobei dem Bildschirm (4) zumindest ein Stellantrieb (10), vorzugsweise Elektromotor, zur Verstellung des Bildschirms (4) zugeordnet ist.

7. Spiel- und/oder Unterhaltungsgerät nach einem der vorhergehenden Ansprüche, wobei ein von einem Gerätebediener betätigbares Eingabemittel zur Verstellung der Bildschirmposition vorgesehen ist.

8. Spiel- und/oder Unterhaltungsgerät nach einem der vorhergehenden Ansprüche, wobei die Voreinstellvorrichtung (12) einen Positionsspeicher (14) zur Abspeicherung einer jeweils individuell eingestellten Bildschirmposition als vorbestimmte Bildschirmposition, die einem bestimmten Spieler oder einer bestimmten Spielergruppe zugeordnet ist, aufweist.

9. Spiel- und/oder Unterhaltungsgerät nach einem der vorhergehenden Ansprüche, wobei die Identifikationseinrichtung (13) ein Chipkartenlesegerät (15) aufweist.

10. Spiel- und/oder Unterhaltungsgerät nach einem der vorhergehenden Ansprüche, wobei die Identifikationseinrichtung (13) ein Biometriedatenlesegerät aufweist.

11. Spiel- und/oder Unterhaltungsgerät nach einem der vorhergehenden Ansprüche, wobei eine Steuervorrichtung (16) zur automatischen Verstellung der Bildschirmposition in Abhängigkeit des Spielablaufs vorgesehen ist.

12. Spiel- und/oder Unterhaltungsgerät nach dem vorhergehenden Anspruch, wobei die Steuervorrichtung (16) Gewinnanzeigemittel zur Verstellung der Bildschirmposition und/oder zum zyklischen Hin- und Herbewegen des Bildschirms (4) bei Erzielen eines Spielgewinns aufweist.

13. Spiel- und/oder Unterhaltungsgerät nach einem der vorhergehenden Ansprüche, wobei der zumindest eine Bildschirm als Flachbildschirm ausgebildet ist.

14. Spiel- und/oder Unterhaltungsgerät nach einem der vorhergehenden Ansprüche, wobei ein Spieltisch (2) mit mehreren Spielerplätzen vorgesehen ist, die jeweils einen an einem Tischpaneel (3) verstellbar gelagerten Bildschirm aufweisen.

15. Spiel- und/oder Unterhaltungsgerät nach dem vorhergehenden Anspruch, wobei der Spieltisch (2) einen modularen Aufbau mit mehreren Tischpaneelbausteinen (6) besitzt, die jeweils ein Paneelteil besitzen, an dem ein Bildschirm (4) beweglich gelagert ist und das seitliche Anschlüsse (17) zum Anschließen von Paneelverbindungs- und/oder Paneelendstücken besitzt.

## Claims

1. Gaming and/or entertainment device, comprising at least one screen (4) which is arranged adjustably on a device panel (3), **characterised in that** a pre-setting apparatus (12) for automatically pre-setting the screen (4) to a predetermined screen position as a function of a player detected by an identification device (13) is provided.

2. Gaming and/or entertainment device according to the preceding claim, wherein the screen (4) is adjustable between a lowered position lowered into the device panel (3), substantially with no projection beyond the device panel (3), and an operating position protruding from the device panel (3).

3. Gaming and/or entertainment device according to the preceding claim, wherein the screen (4) is tiltable, at least about a horizontal transverse axis.

4. Gaming and/or entertainment device according to one of the preceding claims, wherein the screen (4) is tiltable in a multiaxial manner.

5. Gaming and/or entertainment device according to one of the preceding claims, wherein the screen (4) can be extended and retracted in translation substantially perpendicular to the device panel surface.

6. Gaming and/or entertainment device according to one of the preceding claims, wherein at least one actuating drive (10), preferably an electric motor, is associated with the screen (4) for adjustment of the screen (4).

7. Gaming and/or entertainment device according to one of the preceding claims, wherein an input means actuatable by a device operator is provided for adjusting the screen position.

8. Gaming and/or entertainment device according to one of the preceding claims, wherein the pre-setting apparatus (12) has a position memory (14) for storing a respective individually set screen position as a predetermined screen position which is associated with a specific player or with a specific group of players.

9. Gaming and/or entertainment device according to one of the preceding claims, wherein the identification device (13) comprises a chip card reading unit (15).

10. Gaming and/or entertainment device according to one of the preceding claims, wherein the identification device (13) comprises a biometric data reading unit.

11. Gaming and/or entertainment device according to one of the preceding claims, wherein a control apparatus (16) is provided for automatic adjustment of the screen position as a function of gameplay.

12. Gaming and/or entertainment device according to the preceding claim, wherein the control apparatus (16) has a winning display means for adjustment of the screen position and/or for the cyclic movement to and fro of the screen (4) when a game is won.

13. Gaming and/or entertainment device according to one of the preceding claims, wherein the at least one screen is designed as a flat screen.

14. Gaming and/or entertainment device according to one of the preceding claims, wherein a playing table (2) having a plurality of player positions is provided, each player position having a screen mounted adjustably on a table panel (3).

15. Gaming and/or entertainment device according to the preceding claim, wherein the playing table (2) has a modular construction with a plurality of table panel modular units (6), which each have a panel part on which a screen (4) is mounted movably, and which has lateral connectors (17) for the connection of panel connection pieces and/or panel end pieces.

## Revendications

1. Appareil de jeu et/ou de divertissement avec au moins un écran (4) qui est disposé d'une manière ajustable à un panneau d'appareil (3), **caractérisé en ce qu'**il est prévu un dispositif de préréglage (12) pour le préréglage automatique de l'écran (4) à une position d'écran prédéterminée en fonction d'un joueur détecté à chaque fois par une installation d'identification (13).

2. Appareil de jeu et/ou de divertissement selon la revendication précédente, où l'écran (4) est ajustable entre une position noyée dans le panneau d'appareil (3) sensiblement sans dépasser le panneau d'appareil (3) et une position de fonctionnement faisant saillie du panneau d'appareil (3).

3. Appareil de jeu et/ou de divertissement selon la revendication précédente, où l'écran (4) peut être basculé au moins autour d'un axe transversal horizontal.

4. Appareil de jeu et/ou de divertissement selon l'une des revendications précédentes, où l'écran (4) peut être basculé autour de plusieurs axes.

5. Appareil de jeu et/ou de divertissement selon l'une des revendications précédentes, où l'écran (4) peut être sorti et rentré selon une translation sensiblement perpendiculairement à la surface du panneau d'appareil.

6. Appareil de jeu et/ou de divertissement selon l'une des revendications précédentes, où est associé à l'écran (4) au moins une commande de positionnement (10), de préférence un moteur électrique, pour l'ajustement de l'écran (4).

7. Appareil de jeu et/ou de divertissement selon l'une des revendications précédentes, où est prévu un moyen d'entrée actionnable par l'actionneur de l'appareil pour l'ajustement de la position de l'écran.

8. Appareil de jeu et/ou de divertissement selon l'une des revendications précédentes, où le dispositif de préréglage (12) présente une mémoire de position (14) pour stocker une position d'écran réglée à chaque fois individuellement comme position d'écran prédéterminée, qui est associée à un joueur défini ou à un groupe de joueur défini.

9. Appareil de jeu et/ou de divertissement selon l'une des revendications précédentes, où l'installation d'identification (13) présente un appareil de lecture de carte à puce (15).

10. Appareil de jeu et/ou de divertissement selon l'une des revendications précédentes, où l'installation d'identification (13) présente un appareil de lecture de données biométriques.

11. Appareil de jeu et/ou de divertissement selon l'une des revendications précédentes, où est prévu un dispositif de commande (16) pour l'ajustement automatique de la position de l'écran en fonction du déroulement du jeu.

12. Appareil de jeu et/ou de divertissement selon la revendication précédente, où le dispositif de commande (16) présente des moyens d'affichage de gain pour l'ajustement de la position de l'écran et/ou pour le déplacement alternatif cyclique de l'écran (4) lors de l'atteinte d'un gain de jeu.

13. Appareil de jeu et/ou de divertissement selon l'une des revendications précédentes, où le au moins un écran est réalisé comme écran plat.

14. Appareil de jeu et/ou de divertissement selon l'une des revendications précédentes, où est prévue une table de jeu (2) avec plusieurs places de joueur, qui présentent à chaque fois un écran logé d'une manière ajustable à un panneau de table (3).

15. Appareil de jeu et/ou de divertissement selon la revendication précédente, où la table de jeu (2) possède une construction modulaire avec plusieurs composants de panneau de table (6), qui possèdent chacun une partie de panneau à laquelle est logé d'une manière mobile un écran (4) et qui possède des connections latérales (17) pour la connection de pièces de liaison de panneau et/ou de pièces d'extrémité de panneau.
